# EUROPÄISCHE PATENTSCHRIFT

(11) **EP 0 905 847 B1**
(45) Veröffentlichungstag und Bekanntmachung des Hinweises auf die Patenterteilung: **02.05.2003**
(21) Anmeldenummer: 98117740.5
(22) Anmeldetag: 18.09.1998
(51) Int. Cl.: H02H 3/33, H02H 3/04

(54) **Fehlerstrom-Schutzeinrichtung**
Fault-current protective device
Dispositif de protection de courant de fuite

(30) Priorität: 30.09.1997 DE 19743036
(43) Veröffentlichungstag der Anmeldung: 31.03.1999
(73) Patentinhaber: SIEMENS AKTIENGESELLSCHAFT, 80333 München (DE)
(72) Erfinder: Bauer, Bernhard Dipl.-Ing., 93053 Regensburg (DE); Schmid, Reinhard Dipl.-Ing., 93051 Regensburg (DE)

(56) Entgegenhaltungen:
- EP-A- 0 739 073
- GB-A- 2 268 011
- US-A- 5 446 682

## Beschreibung

Die Erfindung bezieht sich auf eine Fehlerstrom-Schutzeinrichtung gemäß dem Oberbegriff des Anspruchs 1. Eine derartige Fehlerstrom-Schutzeinrichtung ist aus der GB 2 268 011 A bekannt.

Eine Fehlerstrom-Schutzeinrichtung dient zur Sicherstellung des Schutzes gegen einen gefährlichen Fehlerstrom in einer elektrischen Anlage. Ein solcher Fehlerstrom oder betrieblicher Arbeitsstrom tritt auf, wenn ein spannungsführendes Teil einer elektrischen Anlage einen elektrischen Kontakt gegen Erde aufweist. Dies ist beispielsweise dann der Fall, wenn eine Person ein spannungsführendes Teil einer elektrischen Anlage berührt. Der Fehlerstrom fließt dann über die Person als Körperstrom gegen Erde ab. Die zum Schutz gegen gefährliche Körperströme eingesetzten Fehlerstrom-Schutzeinrichtungen müssen dann bei einem Fehlerstrom, der größer als der Bemessungsfehlerstrom ist, sicher und schnell die elektrische Anlage vom Netz trennen.

Der Aufbau einer Fehlerstrom-Schutzeinrichtung ist beispielsweise aus "etz", Band 107 (1986), Heft 20, Seiten 938 bis 945, bekannt. Dort sind insbesondere in den Bildern 1 bis 3 Prinzipschaltbilder und Funktionsprinzipien einer Fehlerstrom-Schutzeinrichtung dargestellt. Dabei werden zwei unterschiedliche Grundtypen unterschieden. Als Fehlerstrom-Schutzschalter oder FI-Schutzschalter wird eine Fehlerstrom-Schutzeinrichtung bezeichnet, in der die zur Auslösung erforderliche elektrische Energie netzspannungsunabhängig aus dem Fehlerstrom selbst gewonnen wird. Beim sogenannten Differenzstrom- oder DI-Schutzschalter handelt es sich demgegenüber um eine Fehlerstrom-Schutzeinrichtung, bei der die zur Auslösung erforderliche elektrische Hilfsenergie aus dem Netz entnommen wird. Ein solcher DI-Schutzschalter benötigt somit zu seinem Betrieb einen Netzanschluss sowie ein Netzteil, das die Netzspannung in die zum Betrieb seiner Komponenten erforderliche Versorgungsspannung umwandelt.

Bekannte Fehlerstrom-Schutzeinrichtungen lösen einen Trennschalter dann aus, wenn der von ihnen erfasste Fehlerstrom einen vorgegebenen Grenzwert, d. h. einen vorgegebenen Bemessungsfehlerstrom überschreitet. Dieser Grenzwert ist aber für unterschiedliche elektrische Anlagen nicht notwendigerweise gleich, da sich die im Normalbetrieb auftretenden und als betrieblicher Ableitstrom bezeichneten Fehlerströme je nach elektrischer Anlage im Regelfall unterscheiden, so dass der Bemessungsfehlerstrom entsprechend eingestellt werden muss um Fehlauslösungen zu vermeiden.

Des weiteren kann es zum sicheren Betrieb der elektrischen Anlage und zum Vermeiden einer unerwünschten Betriebsunterbrechung von Interesse sein, das Auftreten eines kritischen Fehlerstromes unabhängig vom Auslösen eines Trennschalters erkennen zu können. Hierzu ist es aus der GB 2 268 011 A bekannt, ein aus einem detektierten Fehlerstrom abgeleitetes Fehlersignal bei Überschreiten eines Referenzwertes mittels einer Leuchtdiode optisch anzuzeigen.

Der Erfindung liegt nun die Aufgabe zugrunde, eine Fehlerstrom-Schutzeinrichtung der eingangs genannten Art anzugeben, die bei gleichzeitiger Verringerung der Stromaufnahme das Auftreten eines Fehlerstromes in einer elektrischen Anlage unabhängig vom Auslösen eines Trennschalters anzeigt.

Die genannte Aufgabe wird gemäß der Erfindung gelöst mit einer Fehlerstrom-Schutzeinrichtung mit den Merkmalen des Patentanspruches 1. Gemäß der Erfindung enthält die Fehlerstrom-Schutzeinrichtung zusätzlich zu einer Detektionseinrichtung zum Erfassen eines Fehlerstromes sowie einer Vergleichseinrichtung zum Vergleichen des Fehlerstromes mit wenigstens einem vorgegebenen Referenzwert und zum Ansteuern zumindest eines optischen Fehlerstrom-Anzeigeelementes einen Impulsgenerator zum Betreiben des zumindest einen optischen Anzeigeelementes im Impulsbetrieb.

Das optische Fehlerstrom-Anzeigeelement ermöglicht eine Aussage über den Betriebszustand einer elektrischen Anlage hinsichtlich eines in ihr auftretenden Fehlerstromes. So kann mit Hilfe eines einzigen optischen Fehlerstrom-Anzeigeelementes angezeigt werden, ob in der Anlage ein Fehlerstrom auftritt, der beispielsweise zwar noch nicht das Auslösen eines Schutzschalters bewirkt, aber dennoch signalisiert, dass in der elektrischen Anlage bereits ein Fehlerstrom fließt, dessen Ursachen überprüft werden müssen, um ein Abschalten der elektrischen Anlage zu einem ungünstigen Zeitpunkt zu vermeiden.

Ein weiterer Vorteil besteht darin, dass bei einer Fehlerstrom-Schutzeinrichtung mit einstellbarem Bemessungs- oder Nennfehlerstrom dessen Einstellung, d.h. Anpassung auf die Betriebsbedingungen der geschützten Anlage erleichtert ist. Dieser Bemessungsfehlerstrom muss größer sein als der betriebliche Ableitstrom, d.h. größer sein als der im Normalbetrieb der elektrischen Anlage fließende Fehlerstrom. Ein zu niedrig eingestellter Bemessungsfehlerstrom führt zu einem unerwünschten Abschalten. Der Bemessungsfehlerstrom kann dann sukzessive auf einen Wert eingestellt werden, bei dem der der Vergleichseinrichtung zugeführte Referenzwert unterschritten wird, d.h. das optische Fehlerstrom-Anzeigeelement erlischt oder zu leuchten beginnt.

Die Detektionseinrichtung enthält eine elektrische Schaltung zum Erzeugen einer aus dem Fehlerstrom abgeleiteten Fehlerspannung. Dadurch können die von der Detektionseinrichtung aufgenommenen Signale in nachgeschalteten elektronischen Komponenten einfach weiterverarbeitet werden. Die Vergleichseinrichtung enthält eine vorzugsweise als Schmitt-Trigger-Schaltung ausgebildete Komparatorschaltung zum Vergleichen der Fehlerspannung mit einer Referenzspannung.

Die Komparatorschaltung enthält für jedes optische Fehlerstrom-Anzeigeelement einen insbesondere als Schmitt-Trigger ausgebildeten Komparator, insbesondere einen CMOS-Komparator. Durch diese Maßnahme ist die für die optische Anzeige erforderliche Leistungsaufnahme der Fehlerstrom-Schutzeinrichtung verringert. Diese Leistungsaufnahme würde bei einem typischen Netzteil mit einer Versorgung aus drei Außenleitern (3-phasiges Wechselstromsystem), einer B6-Brückengleichrichterschaltung und einem einfachen Längsregler bei einer Außenleiterspannung von 480V etwa 0,66W pro 1mA Stromaufnahme sein. Bei 480V Außenleiterspannung liegen am Ausgang der B6-Brückengleichrichterschaltung etwa 670V Gleichspannung an. Über den Längsregler, der im Prinzip ein in Reihe zum Verbraucher, d.h. das optische Fehlerstrom-Anzeigeelement und die zu seiner Ansteuerung erforderlichen Schaltelemente, angeschlossener steuerbarer Widerstand (Kollektor-Emitter-Strecke eines Transistors) ist, fällt dann eine Spannung ab, die der Differenz zwischen den 670V und der Betriebsspannung des Verbrauchers entspricht. Mit einer typischen Betriebsspannung von etwa 12V ergeben sich dann ca. 658V Spannungsabfall, so dass bei 1mA Stromaufnahme des Verbrauchers 0,66W Leistung alleine am Längsregler entfallen. Durch die Verwendung der aus Einzel-Komparatoren aufgebauten Komparatorschaltung wird die Stromaufnahme der Verbraucher reduziert, so dass die im Längsregler umgesetzte Verlustleistung ebenfalls verringert ist.

Insbesondere ist zur Funktionskontrolle der Fehlerstrom-Schutzeinrichtung zumindest ein optisches Betriebs-Anzeigeelement vorgesehen, das vorzugsweise ohne Zwischenschaltung eines Komparators an ein Netzteil angeschlossen ist. Durch diese Maßnahme wird die Anzahl der erforderlichen Komparatoren und somit auch die Leistungsaufnahme verringert.

Insbesondere sind als optische Anzeigeelemente Leuchtdioden vorgesehen. Dadurch ist die Stromaufnahme weiter verringert.

Insbesondere sind die optischen Fehlerstrom-Anzeigeelemente zwischen die Komparatorschaltung und den Impulsgenerator und das optische Betriebsanzeigeelement zwischen das Netzteil und den Impulsgenerator geschaltet.

Das Verhältnis zwischen Leuchtpause und Leuchtdauer beim Pulsbetrieb des optischen Anzeigeelementes beträgt wenigstens 5. Auf diese Weise kann die Leistungsaufnahme deutlich verringert werden.

In einer weiteren bevorzugten Ausgestaltung der Erfindung enthält auch der Impulsgenerator einen diskreten Komparator, insbesondere einen CMOS-Komparator.

In einer bevorzugten Ausgestaltung der Erfindung sind die optischen Anzeigeelemente parallel zueinander geschaltet. Dadurch ist durch eine einfache Beschaltung dieselbe Helligkeit aller optischen Anzeigeelemente möglich. Alternativ sind die optischen Anzeigeelemente in Reihe geschaltet. Dadurch kann die Stromaufnahme für den Fall, dass alle Anzeigeelemente leuchten, minimiert werden.

Insbesondere ist der Ausgang jedes Komparators als "push pull"-Ausgang geschaltet. Dadurch kann auch bei Reihenschaltung der optischen Anzeigeelemente ihre Stromaufnahme und damit ihre Leuchtkraft unabhängig von der Anzahl der leuchtenden Anzeigeelemente eingestellt werden.

In einer besonders bevorzugten Ausgestaltung der Erfindung ist der Ausgang jedes Komparators der Komparatorschaltung als "open drain"-Ausgang geschaltet. Dadurch kann bei Reihenschaltung der optischen Anzeigeelemente die Anzahl der Bauelemente und damit auch die Stromaufnahme reduziert werden.

Zur weiteren Erläuterung der Erfindung wird auf die Ausführungsbeispiele der Zeichnung verwiesen. Es zeigen:
- FIG 1: eine Fehlerstrom-Schutzeinrichtung gemäß der Erfindung in einer Prinzipdarstellung,
- FIG 2: eine Fehlerstrom-Schutzeinrichtung mit drei parallel zueinander geschalteten optischen Anzeigeelementen,

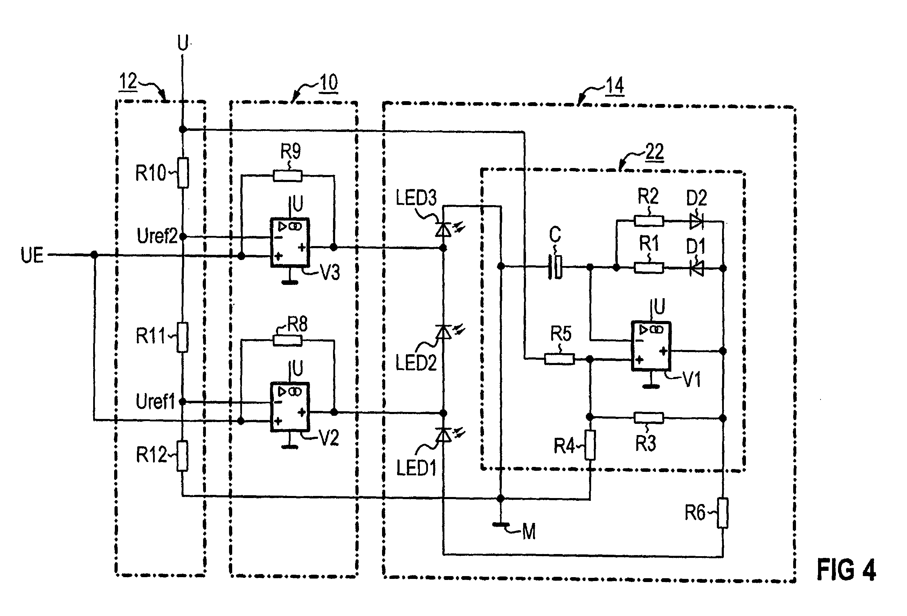

- FIG 3 und 4: jeweils eine Fehlerstrom-Schutzeinrichtung mit drei in Reihe geschalteten optischen Anzeigeelementen.

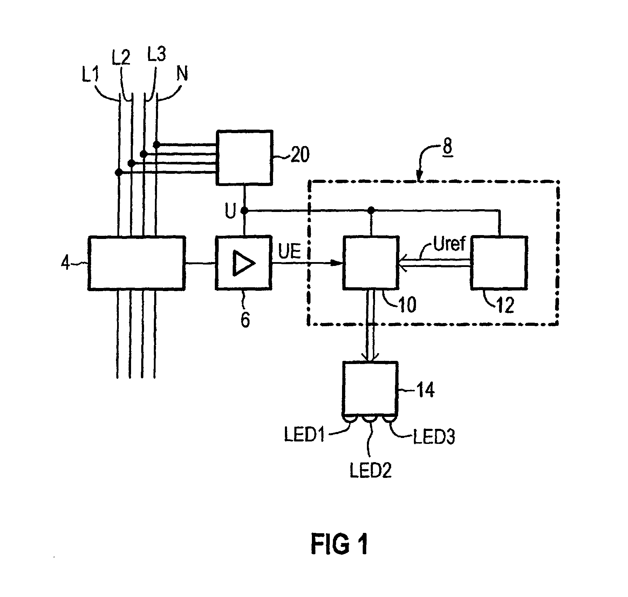

Gemäß FIG 1 umfaßt eine Fehlerstrom-Schutzeinrichtung eine Detektionseinrichtung 4, mit der ein in einem Netz L1,L2,L3,N fließender Fehlerstrom erfaßt werden kann. Der Fehlerstrom wird hierzu in einem Summenstromwandler, wie er beispielsweise in dem eingangs erwähnten Fachartikel dargestellt ist, erfaßt und in der Detektionseinrichtung 4 in ein Spannungssignal umgewandelt. Dieses Spannungssignal wird in einem Verstärker 6 verstärkt und als Fehlerspannung UE an eine Vergleichseinrichtung 8 weitergeleitet.

Die Vergleichseinrichtung 8 umfaßt eine Komparatorschaltung 10 in der die Fehlerspannung UE mit wenigstens einer Referenzspannung Uref verglichen wird, die der Komparatorschaltung 10 von einer Referenzschaltung 12 zur Verfügung gestellt wird.

Der Ausgang der Komparatorschaltung 10 ist an eine optische Anzeigeeinrichtung 14 angeschlossen, die ein optisches Betriebs-Anzeigeelement, im Beispiel eine Leuchtdiode LED1, sowie zwei optische Fehlerstrom-Anzeigeelemente, im Beispiel Leuchtdioden LED2,LED3, umfaßt.

Zum Betreiben der Fehlerstrom-Schutzeinrichtung ist außerdem ein Netzteil 20 vorgesehen, das die vom Netz bereitgestellte 3-phasige Wechselspannung in eine zum Betreiben der Fehlerstrom-Schutzeinrichtung 2 erforderliche Gleichspannung U umwandelt.

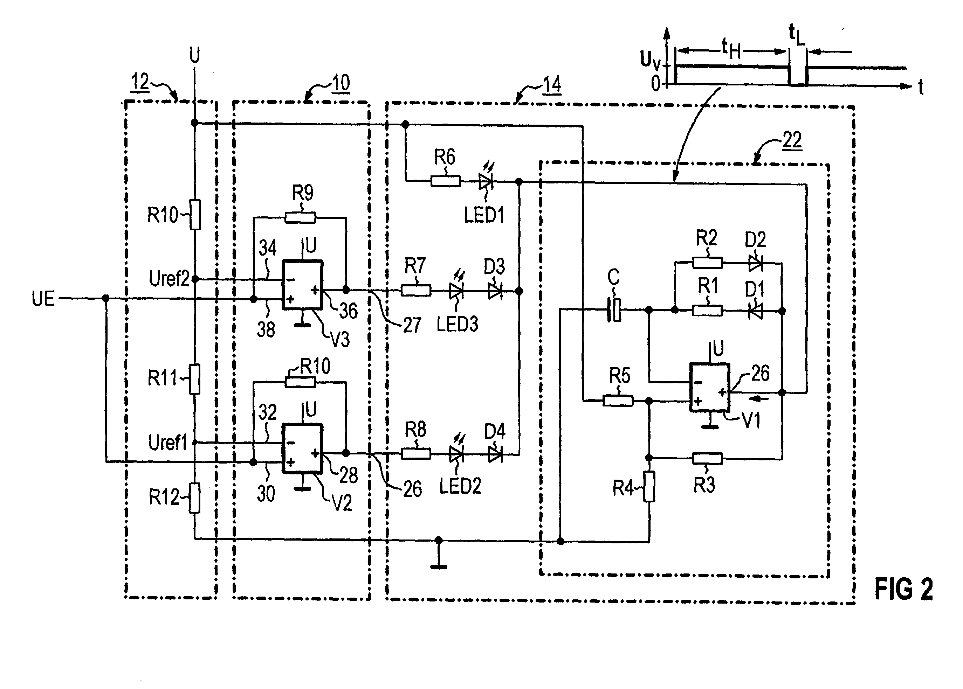

Gemäß FIG 2 sind die drei Leuchtdioden LED1,LED2 bzw. LED3 der Anzeigeeinrichtung 14, insbesondere Leuchtdioden mit geringer Stromaufnahme und großer Leuchtkraft, parallel zueinander geschaltet und an den Ausgang eines Impulsgenerators 22 angeschlossen. Der Impulsgenerator 22 ist aus einem geeignet beschalteten Komparator V1, vorzugsweise ein CMOS-Komparator, aufgebaut.

Am Ausgang 24 des Impulsgenerators 22, der dem Ausgang 26 des Komparators V1 entspricht, liegt eine pulsförmige Spannung an, die zwischen 0 V und der Komparatorausgangsspannung U_{V} pulsiert, die annähernd gleich der Betriebsspannung U ist. Die Zeitdauer t_{H} des Spannungsimpulses, d.h. Spannungslevel "HIGH" (Leuchtpause), und die Zeitdauer t_{L} zwischen zwei aufeinander folgenden Spannungsimpulsen, d.h. Spannungslevel "LOW" (Leuchtdauer), kann durch geeignete Dimensionierung der externen Beschaltung des Komparators V1 eingestellt werden. Der Ausgang 26 des Komparators V1 ist hierzu über eine Reihenschaltung einer Diode D1, eines Ladewiderstandes R1 und eines Kondensators C nach Masse geschaltet. Parallel zu dem aus dem Ladewiderstand R1 und der Diode D1 bestehenden Leitungszweig ist ein Entladewiderstand R2 und eine in Serie zu ihm und antiparallel zur Ladediode D1 geschaltete Entladediode D2 geschaltet. Das Produkt aus dem Widerstandswert des Entladewiderstandes R1 und der Kapazität des Kondensators C und das Produkt aus dem Widerstandswert des Entladewiderstandes R2 und der Kapazität des Kondensators C entspricht der Ladezeitkonstante bzw. der Entladezeitkonstante.

Die als Betriebs-Anzeigeelement dienende Leuchtdiode LED1 ist mit ihrer Kathode unmittelbar am Ausgang 24 des Impulsgenerators 22 und mit ihrer Anode über einen Vorwiderstand R6 an die Versorgungsspannung U angeschlossen. Solange am Ausgang 24 des Impulsgenerators 22 die Komparatorausgangsspannung U_{V} ansteht, kann über die Leuchtdiode LED1 kein Strom fließen, so daß diese nicht leuchtet. Die Dauer einer Leuchtpause entspricht somit der Dauer t_{H} des vom Funktionsgenerator 22 erzeugten Spannungsimpulses. Liegt der Ausgang 24 des Impulsgenerators 22 auf 0 V, so kann über die Leuchtdiode LED1 und den Komparator V1 ein Strom nach Masse fließen und die Leuchtdiode LED1 leuchtet. Die Leuchtdauer entspricht somit der Zeitdauer t_{L} zwischen zwei aufeinanderfolgenden Spannungsimpulsen.

Die Kapazität des Kondensators C beträgt vorzugsweise mehr als 100nF, im Ausführungsbeispiel 470 nF. Dadurch können bei einem vorgegebenen Tastverhältnis 5 ≤ t_{H}/t_{L} ≤ 100 und einer einem bevorzugten Tastverhältnis 5 ≤ t_{H}/t_{L} ≤ 100 und einer Leuchtdauer t_{L} ≥ 5ms die Widerstände R1 und R2 möglichst niederohmig dimensioniert werden. Dadurch wird die Funktion des Impulsgenerators unabhängig vom Sperrstrom der Dioden D1 und D2 bei Temperaturen von ≥ 70°C sichergestellt.

Die Widerstände R3,R4,R5 sind hochohmig und dienen zur Referenzspannungserzeugung am Eingang 26 des Komparators V1. In der Figur ist außerdem zu erkennen, daß der Komparator V1 über separate Eingänge an die Versorgungsspannung U und an Masse angeschlossen ist.

Eine als erstes Fehlerstrom-Anzeigeelement vorgesehene Leuchtdiode LED2 und eine als weiteres Fehlerstrom-Anzeigeelement vorgesehene Leuchtdiode LED3 sind jeweils über eine Schutzdiode D4 bzw. D3 ebenfalls an den Ausgang 24 des Impulsgenerators 22 angeschlossen. Die Anoden der Leuchtdioden LED2 und LED3 sind jeweils über einen Vorwiderstand R8 bzw. R7 an die Ausgänge 26,27 der Komparatorschaltung 10 angeschlossen. Die Komparatorschaltung 10 enthält zwei Komparatoren V2,V3, die im bevorzugten Ausführungsbeispiel baugleich mit dem Komparator V1 sind. Der Komparator V2 ist mit einem Eingang 30 an die vom Fehlerstrom abgeleitete Fehlerspannung UE angeschlossen. An den Referenzeingang 32 des Komparators V2 ist eine Referenzspannung Uref1 angelegt, die vom Komparator V2 mit der Fehlerspannung UE verglichen wird. Ein Rückkopplungs-Widerstand R10 dient zur Realisierung der Schmitt-Trigger-Funktion des Komparators V2.

Übersteigt die Fehlerspannung UE die von der Referenzeinrichtung 12, im Beispiel eine einfache Spannungsteilerschaltung, bereitgestellte Referenzspannung Uref1, so liegt am Ausgang 28 des Komparators V2 und somit auch am Ausgang 26 der Komparatorschaltung 10 die Ausgangsspannung U_{V} ≈ U an, so daß dann, wenn am Ausgang 24 des Impulsgenerators 22 die Spannung 0 anliegt, ein Strom über die Leuchtdiode LED2 fließt. Die Schutzdiode D4 ist dabei zum Schutz der Leuchtdiode LED2 vorgesehen, wenn am Ausgang 28 des Komparators V2 die Spannung 0 und am Ausgang 24 des Impulsgenerators 22 die Betriebsspannung U, beispielsweise 12V, anliegt, da die maximal zulässige Sperrspannung für Leuchtdioden in der Regel niedriger als die zum Betrieb der Fehlerstrom-Schutzeinrichtung erforderliche Betriebsspannung U ist. Die Leuchtdiode LED2 blinkt also dann, wenn die Fehlerspannung UE größer ist als die über die Widerstände R10,R11 und R12 eingestellte Referenzspannung Uref1. Demgegenüber blinkt die Leuchtdiode LED1 unabhängig vom Wert der Fehlerspannung UE im vom Impulsgenerator 22 aufgeprägten Tastverhältnis.

Eine zweite Referenzspannung Uref2 wird dem Referenzeingang 34 des weiteren Komparators V3 zugeführt, dessen Ausgang 36 an den Ausgang 27 der Komparatorschaltung 10 angeschlossen ist. An diesen Ausgang 27 ist über den Vorwiderstand R7 die Anode der als weiteres Fehlerstrom-Anzeigeelement dienenden Leuchtdiode LED3 angeschlossen. Die Kathode der Leuchtdiode LED3 ist über eine Schutzdiode D3 an den Ausgang 24 des Impulsgenerators 22 geschaltet.

Überschreitet die Fehlerspannung UE am Eingang 38 des Komparators V3 die Referenzspannung Uref2 so blinkt auch die Leuchtdiode LED3 im vom Impulsgenerator 22 aufgeprägten Tastverhältnis. Im Ausführungsbeispiel ist somit eine optische Anzeige vorgesehen, die zwischen drei Ableitstrom- oder Fehlerstrompegeln UE < Uref1, Uref1 < UE < Uref2 und Uref2 < UE unterscheidet. Eine geeignete Abstufung liegt beispielsweise dann vor, wenn Uref1 bzw. Uref2 zu einem Wert korrespondieren der etwa 25% bzw. 50% der zum Nenn- oder Bemessungsfehlerstrom IΔn gehörenden Fehlerspannung UE beträgt. Außerdem wird über die Leuchtdiode LED1 eine Anzeige zur Verfügung gestellt, die unabhängig vom Vorhandensein eines Fehlerstromes stets leuchtet und die Betriebsbereitschaft der Fehlerstrom-Schutzeinrichtung signalisiert.

Die Fehlerspannung UE ist in der Regel auf den Nenn- oder Bemessungsfehlerstrom normiert. Mit anderen Worten: Der Betrag der Fehlerspannung UE hängt nur vom Verhältnis zwischen Bemessungsfehlerstrom und dem tatsächlichen Fehlerstrom ab. Dies ermöglicht bei einer Fehlerstrom-Schutzeinrichtung mit einstellbarem Bemessungsfehlerstrom eine einfache Einstellung des Bemessungsfehlerstroms auf die Betriebsbedingungen der elektrischen Anlage. Der Bemessungsfehlerstrom kann dann bei ordnungsgemäßem Betrieb der Anlage ausgehend von einem hohen Ausgangswert (LED2 und LED3 blinken nicht) sukzessive reduziert werden. Eine Einstellung, bei der LED2 gerade noch nicht leuchtet, entspricht dann einem Bemessungsfehlerstrom, der gemäß dem vorstehenden Ausführungsbeispiel etwa das Vierfache des betrieblichen Ableitstroms beträgt. Auf diese Weise kann die Fehlerstrom-Schutzeinrichtung einfach eingestellt und Fehlauslösungen vermieden werden.

Der über die Leuchtdiode LED1 fließende Strom beträgt I_{LED1} = (U - U_{LED1})/R6, wobei U_{LED1} der Spannungsabfall an der Leuchtdiode LED1 in Durchlaßrichtung ist. Über die Leuchtdioden LED2,LED3 fließt für den Fall, daß sich der Komparatorausgang 28 im H-Pegel befindet, der Strom I_{LED2} ≈ I_{LED3} = (U_{V}-U_{LED2(LED3)}-U_{D3(D4)})/R6, wobei U_{D3(D4)} der Spannungsabfall an der Diode D3 bzw. der Diode D4, U_{LED2(LED3)} der Spannungsabfall an der Leuchtdiode LED2 bzw. LED3 ist, und der Widerstandswert der Widerstände R7 und R8 gleich dem Widerstandswert des Widerstandes R6 gewählt ist. Blinken alle drei Leuchtdioden LED1,LED2,LED3 gleichzeitig, so beträgt der Gesamtstrom I_{LED} = I_{LED1} + I_{LED2} + I_{LED3}. Um im Unterspannungsfall Betriebsspannungseinbrüche zu vermeiden sind die Widerstände R6,R7 und R8 größer als jeweils 1kΩ zu dimensionieren.

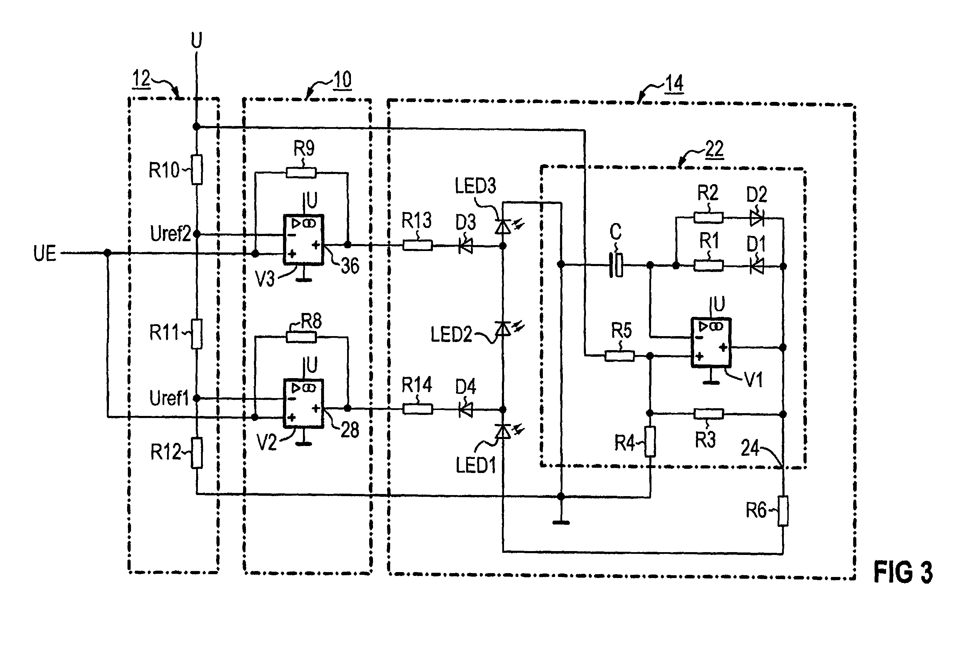

Im Ausführungsbeispiel gemäß FIG 3 sind die Leuchtdioden LED1,LED2,LED3 in Reihe zueinander geschaltet. Der Ausgang 24 des Impulsgenerators 22 ist in diesem Ausführungsbeispiel über den Vorwiderstand R6 an die Anode der Leuchtdiode LED1 angeschlossen. Der Komparator V2 stellt an seinem Ausgang 28, je nachdem ob die Fehlerspannung UE kleiner oder größer als die Referenzspannung Uref1 ist, die Spannung 0 oder die Spannung Uᵥ ≈ U bereit. Ist die Fehlerspannung UE kleiner als Uref so ist die Schutzdiode D4 in Durchlaßrichtung gepolt und entsprechend dem Tastverhältnis des Impulsgenerators 22 fließt ein Strom über die Leuchtdiode LED1, die Schutzdiode D4, den Widerstand R7 und den Komparator V2 ab. Übersteigt die Fehlerspannung UE die Referenzspannung Uref1, so wird die Schutzdiode D4 in Sperrichtung betrieben und der aus dem Komparator V1 über Widerstand R6 und Leuchtdiode LED1 fließende Strom fließt über die Leuchtdiode LED2, die Schutzdiode D3 den Vorwiderstand R13 und den Komparator V3 ab. Übersteigt die Fehlerspannung UE auch noch die Referenzspannung Uref2, so werden die beiden Schutzdioden D3 und D4 in Sperrichtung betrieben und alle drei Leuchtdioden LED1,LED2,LED3 von Strom durchflossen, so daß diese entsprechend dem Tastverhältnis des Impulsgenerators 22 blinken.

Die Komparatoren V1,V2 und V3 werden in den Ausführungsbeispielen gemäß Figuren 2 und 3 mit sogenanntem "push-pull"-Ausgang betrieben. Bei dieser Betriebsweise stehen an den Ausgängen 26,28 und 36 der Komparatoren V1,V2,V3 unabhängig von der externen Beschaltung stets definierte Spannungwerte U_{V}, im Ausführungsbeispiel annähernd die Betriebsspannung U, oder Massepotential an.

Als Komparatoren sind im Ausführungsbeispiel als Schmitt-Trigger beschaltete oder ausgebildete CMOS-Komparatoren mit besonders niedriger Stromaufnahme geeignet. Durch die Verwendung von als Schmitt-Trigger ausgebildeten Komparatoren V2,V3 kann eine durch die unvermeidliche Welligkeit der Fehlerspannung hervorgerufene Instabilität der Anzeige vermieden werden.
Die Widerstände R13 und R14 ermöglichen eine Reduzierung des Abfalles des über die Leuchtdioden LED1,LED2,LED3 fließenden Stromes bei Zuschaltung von Leuchtdiode LED2 und Leuchtdiode LED3. Blinkt nur die Leuchtdiode LED1, beträgt der über sie fließende Strom I_{LED1} = (U_{V}-U_{D4}-U_{LED1})/(R6+R14), wobei U_{D4} der Spannungsabfall an der Schutzdiode D4 ist. Blinken die Leuchtdioden LED1 und LED2 so beträgt der durch sie fließende Strom I_{LED} = (U_{V}-U_{D3}-U_{LED1}-U_{LED2})/(R6+R13) (U_{D3}: Spannungsabfall an D3). Entsprechend für den Fall, daß alle drei Leuchtdioden LED1,LED2,LED3 blinken, gilt I_{LED} = (U_{V}-U_{LED1}-U_{LED2}-U_{LED3})/R6. Somit kann durch entsprechende Dimensionierung der Widerstände R13 und R14 der durch die Leuchtdioden LED1,LED2,LED3 jeweils fließende Strom trotz unterschiedlicher Anzahl blinkender Leuchtdioden in etwa konstant gehalten werden.

Der Ausgang 26 des Komparators V1 des Impulsgenerators 22 ist über einen Widerstand R14 an die Versorgungsspannung U angeschlossen, um einen definierten Ausgangszustand einnehmen zu können. Bei der Beschaltung mit "open-drain"-Ausgang ist eine solche externe Beschaltung nötig, um definierte Spannungsverhältnisse am Ausgang eines Komparators V1 sicherzustellen.

Durch die Verwendung von Komparatoren V2,V3 mit "open-drain"-Ausgang ist der Bauteileaufwand durch Wegfall der Schutzdioden D3 und D4 (FIG 2 und 3) verringert. Der über die Leuchtdioden LED1,LED2,LED3 fließende Strom I_{LED} ist in dieser Schaltung abhängig von der Anzahl der gleichzeitig blinkenden Leuchtdioden. Blinkt nur die Leuchtdiode LED1 so beträgt der Strom I_{LED1} = (U_{V}-U_{LED1})/R6, wobei U_{V} die Ausgangsspannung des Komparators V1 und U₁ der Spannungsabfall an der Leuchtdiode LED1 ist. Entsprechend reduziert sich der durch die Leuchtdioden LED1,LED2,LED3 fließende Strom mit ihrer Anzahl. Bei drei blinkenden Leuchtdioden LED1,LED2,LED3 beträgt der über sie fließende Strom I_{LED} = (U_{V}-U_{LED1}-U_{LED2}-U_{LED3})/R6 (U_{LED2},U_{LED3}: Spannungsabfall an LED2 bzw. LED3). Die daraus resultierenden Helligkeitsunterschiede können bei drei Leuchtdioden LED1,LED2,LED3 und bei einer Betriebsspannung (U = 12V ≈ U_{V}) in Kauf genommen werden. Der Vorteil dieser Beschaltung liegt im wesentlichen in der Einsparung der Schutzdioden D3 und D4 und in der durch die Serienschaltung der Leuchtdioden LED1, LED2,LED3 verringerten Stromaufnahme. Falls ein Helligkeitsausgleich der Leuchtdioden LED1,LED2,LED3 erforderlich ist, kann dieser durch die Hinzuschaltung von Widerständen R13 und R14 analog zum Ausführungsbeispiel gemäß FIG 3 bewirkt werden.

## Patentansprüche

1. Fehlerstrom-Schutzeinrichtung, mit einer einen Fehlerstrom erfassenden Detektionseinrichtung (4), die eine Schaltung zum Erzeugen einer aus dem Fehlerstrom abgeleiteten Fehlerspannung (UE) enthält, und mit einer Vergleichseinrichtung (8), die eine Komparatorschaltung (10) zum Vergleichen der Fehlerspannung (UE) mit einer Referenzspannung (Uref1, Uref2) umfasst und zumindest ein optisches Anzeigeelement (LED1,LED2,LED3) ansteuert,
**gekennzeichnet durch** einen Impulsgenerator (22) zum Betreiben des optischen Anzeigeelementes (LED1,LED2,LED3) im Pulsbetrieb.

2. Fehlerstrom-Schutzeinrichtung nach Anspruch 1, bei der das Verhältnis zwischen Leuchtpause (t_{H}) und Leuchtdauer (t_{L}) beim Pulsbetrieb des optischen Anzeigeelementes (LED1,LED2, LED3) wenigstens 5 beträgt.

3. Fehlerstrom-Schutzeinrichtung nach Anspruch 1 oder 2, bei der der Impulsgenerator (22) einen Komparator (V1) enthält.

4. Fehlerstrom-Schutzeinrichtung nach einem der Ansprüche 1 bis 3, bei der die Anzeigeelemente (LED1,LED2,LED3) zueinander parallel oder in Reihe geschaltet sind.

5. Fehlerstrom-Schutzeinrichtung nach einem der Ansprüche 1 bis 5, bei der die Komparatorschaltung (10) als Schmitt-Trigger-Schaltung ausgebildet ist.

6. Fehlerstrom-Schutzeinrichtung nach einem der Ansprüche 1 bis 5, mit mindestens einem optischen Fehlerstrom-Anzeigeelemente (LED2,LED3) und zumindest einem optischen Betriebs-Anzeigeelement (LED1) zur Funktionskontrolle.

7. Fehlerstrom-Schutzeinrichtung nach Anspruch 6, bei der die Komparatorschaltung (10) für jedes optische Fehlerstrom-Anzeigeelement (LED2,LED3) einen Komparator (V2,V3) enthält.

8. Fehlerstrom-Schutzeinrichtung nach Anspruch 7, bei der der Ausgang (28,34) jedes Komparators (V2,V3) als "open drain"-Ausgang geschaltet ist.

9. Fehlerstrom-Schutzeinrichtung nach einem der Ansprüche 6 bis 8, bei der die optischen Fehlerstrom-Anzeigeelemente (LED2,LED3) zwischen einen Ausgang (24) des Impulsgenerators (22) und einen Ausgang (26,27) der Komparatorschaltung (10) geschaltet sind.

10. Fehlerstrom-Schutzeinrichtung nach einem der Ansprüche 6 bis 9, bei der das optische Betriebs-Anzeigeelement (LED1) ohne Zwischenschaltung eines Komparators an ein Netzteil (20) angeschlossen ist.

11. Fehlerstrom-Schutzeinrichtung nach Anspruch 10, bei dem das Betriebs-Anzeigeelement (LED1) zwischen einen Ausgang (24) des Impulsgenerators (22) und das Netzteil (20) geschaltet ist.

12. Fehlerstrom-Schutzeinrichtung nach einem der Ansprüche Anspruch 1 bis 11, bei der als optisches Betriebs-Anzeigeelement (LED1) und/oder als optisches Fehler-Anzeigeelement eine Leuchtdiode (LED2,LED3) eine Leuchtdiode vorgesehen ist.

13. Fehlerstrom-Schutzeinrichtung nach einem der Ansprüche 7 bis 12, bei der jeder Komparator (V1,V2,V3) ein CMOS-Komparator ist.

14. Fehlerstrom-Schutzeinrichtung nach Anspruch 13, bei der der Ausgang (24,28,34) jedes Komparators (V1,V2,V3) als "push pull"-Ausgang geschaltet ist.

## Claims

1. Residual-current device with a detecting device (4) for detecting a residual current, which has a circuit for generating a fault voltage (UE) derived from the residual current, and with a comparator (8) comprising a comparator circuit (10) for comparing the fault voltage (UE) with a reference voltage (Uref1, Uref2) and which controls at least one visual indicating element (LED1, LED2, LED3), **characterised in that** a pulse generator (22) is used to drive the visual operating element (LED1, LED2, LED3) in pulse mode.

2. Residual-current device according to Claim 1, with the ratio between the illumination pause (t_{H}) and illumination duration (t_{L}) during pulse mode of the visual indicating element (LED1, LED2, LED3) being at least 5.

3. Residual-current device according to Claim 1 or 2, whereby the pulse generator (22) contains a comparator (V1).

4. Residual-current device according to one of Claims 1 to 3, with the indicating elements (LED1, LED2 and LED3) being connected in parallel or in series with each other.

5. Residual-current device according to one of Claims 1 to 5, with the comparator circuit (10) being formed as a Schmitt trigger.

6. Residual-current device according to one of Claims 1 to 5, with at least one visual residual-current indicating element (LED2, LED3) and at least one visual operating indicating element (LED1) for function monitoring.

7. Residual-current device according to Claim 6, with the comparator circuit (10) containing one comparator (V2, V3) for each visual residual-current indicating element (LED2, LED3).

8. Residual-current device according to Claim 7, with the output (28, 34) of each comparator (V2, V3) being connected as an "open-drain" output.

9. Residual-current device according to one of Claims 6 to 8, with the visual residual-current indicting element (LED2, LED3) being connected between an output (24) of the pulse generator (22) and an output (26, 27) of the comparator circuit (10).

10. Residual-current device according to one of Claims 6 to 9, with the visual operating indicating element (LED1) being connected to a power supply assembly (20) without a comparator being interposed.

11. Residual-current device according to Claim 10, with the operating indicating element (LED1) being connected between an output (24) of the pulse generator (22) and the power supply assembly (20).

12. Residual-current device according to one of Claims 1 to 11, with a light-emitting diode (LED2, LED3) being provided as a visual operating indicating element (LED1) and/or a residual-current indicating element.

13. Residual-current device according to one of claims 7 to 12, with each comparator (V1, V2, V3) being a CMOS comparator.

14. Residual-current device according to claim 13, with the output (24, 38, 34) of each comparator (V1, V2, V3) being connected as "push-pull" output.

## Revendications

1. Dispositif de protection de courant de fuite, comportant un dispositif détecteur (4), qui détecte un courant de fuite et qui comprend un circuit pour produire une tension de fuite (UE) déduite du courant de fuite, et un dispositif comparateur (8) qui comprend un circuit comparateur (10) pour comparer la tension de fuite (UE) à une tension de référence (Uref1, Uref2) et qui commande au moins un élément d'affichage optique (LED1, LED2, LED3),
**caractérisé par** un générateur d'impulsions (22) pour faire fonctionner en mode pulsé l'élément d'affichage optique (LED1, LED2, LED3).

2. Dispositif de protection de courant de fuite selon la revendication 1, dans lequel le rapport entre la pause d'éclairage (t_{H}) et la durée d'éclairage (t_{L}) lors du fonctionnement en mode pulsé de l'élément d'affichage optique (LED1, LED2, LED3) vaut au moins 5.

3. Dispositif de protection de courant de fuite selon la revendication 1 ou 2, dans lequel le générateur d'impulsions (22) contient un comparateur (V1).

4. Dispositif de protection de courant de fuite selon l'une des revendications 1 à 3, dans lequel les éléments d'affichage (LED1, LED2, LED3) sont branchés en parallèle ou en série les uns par rapport aux autres.

5. Dispositif de protection de courant de fuite selon l'une des revendications 1 à 4, dans lequel le circuit comparateur (10) est conçu comme un circuit trigger de Schmitt.

6. Dispositif de protection de courant de fuite selon l'une des revendications 1 à 5, comportant au moins un élément d'affichage optique de courant de fuite (LED2, LED3) et au moins un élément d'affichage optique de fonctionnement (LED1) pour le contrôle de fonctionnement.

7. Dispositif de protection de courant de fuite selon la revendication 6, dans lequel le circuit comparateur (10) contient un comparateur (V2, V3) pour chaque élément d'affichage optique de courant de fuite (LED2, LED3).

8. Dispositif de protection de courant de fuite selon la revendication 7, dans lequel la sortie (28, 34) de chaque comparateur (V2, V3) est branchée comme une sortie à drain ouvert dite "open drain".

9. Dispositif de protection de courant de fuite selon l'une des revendications 6 à 8, dans lequel les éléments d'affichage optique de courant de fuite (LED2, LED3) sont branchés entre une sortie (24) du générateur d'impulsions (22) et une sortie (26, 27) du circuit comparateur (10).

10. Dispositif de protection de courant de fuite selon l'une des revendications 6 à 9, dans lequel l'élément d'affichage optique de fonctionnement (LED1) est raccordé à un bloc d'alimentation (20) sans intercaler de comparateur.

11. Dispositif de protection de courant de fuite selon la revendication 10, dans lequel l'élément d'affichage de fonctionnement (LED1) est branché entre une sortie (24) du générateur d'impulsions (22) et le bloc d'alimentation (20).

12. Dispositif de protection de courant de fuite selon l'une des revendications 1 à 11, dans lequel une diode électroluminescente est prévue comme élément d'affichage optique de fonctionnement (LED1) et/ou comme élément d'affichage optique de courant de fuite (LED2, LED3).

13. Dispositif de protection de courant de fuite selon l'une des revendications 7 à 12, dans lequel chaque comparateur (V1, V2, V3) est un comparateur CMOS.

14. Dispositif de protection de courant de fuite selon la revendication 13, dans lequel la sortie (24, 28, 34) de chaque comparateur (V1, V2, V3) est branchée comme une sortie symétrique dite "push-pull".
